(19) Europäisches Patentamt
European Patent Office
Office européen des brevets

(11) EP 0 617 103 B1

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int Cl.[6]: **C09J 175/04**, C08G 18/10
// (C09J175/04, 161:06)

(21) Anmeldenummer: **94103757.4**

(22) Anmeldetag: **11.03.1994**

(54) **Wässrige Dispersion eines Polyurethans und eines Kondensationsharzes**

Aqueous dispersion of a polyurethane and a condensation resin

Dispersion aqueuse d'un polyuréthane et d'une résine de condensation

(84) Benannte Vertragsstaaten:
**BE DE ES FR GB IT NL**

(30) Priorität: **20.03.1993 DE 4309079**

(43) Veröffentlichungstag der Anmeldung:
**28.09.1994 Patentblatt 1994/39**

(73) Patentinhaber: **BASF Aktiengesellschaft
67063 Ludwigshafen (DE)**

(72) Erfinder:
- **Licht, Ulrike, Dr.
D-68163 Mannheim (DE)**
- **Wallon, Alexander, Dr.
D-67117 Limburgerhof (DE)**
- **Auchter, Gerhard, Dr.
D-67098 Bad Duerkheim (DE)**
- **Maempel, Lothar, Dr.
D-68782 Bruehl (DE)**
- **Seibert, Horst
D-67136 Fussgoenheim (DE)**
- **Scherr, Guenter, Dr.
D-67065 Ludwigshafen (DE)**

(56) Entgegenhaltungen:
**EP-A- 0 382 052** **EP-A- 0 490 026**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 617 103 B1

Printed by Jouve, 75001 PARIS (FR)

## Beschreibung

Wäßrige Dispersionen, enthaltend ein Polyurethan und 5 bis 60 Gew.-%, bezogen auf das Polyurethan, eines die Haftung verbessernden Polymeren, wobei das Polyurethan im wesentlichen aufgebaut ist aus

(a) organischen Polyisocyanaten

(b) Dihydroxylverbindungen mit einem Molekulargewicht über 500 bis 5000 g/mol, welche keine Ionengruppen oder in ionische Gruppen überführbaren Gruppen enthalten

(c) Verbindungen mit mindestens einer gegenüber Isocyanat reaktiven funktionellen Gruppe und mindestens einer ionischen oder in eine ionische Gruppe überführbaren Gruppe,

(d) gegebenenfalls von (c) verschiedenen Verbindungen mit mindestens zwei gegenüber Isocyanat reaktiven funktionellen Gruppen und einem Molgewicht von 60 bis 500 g/mol

und das Polyurethan, oder dessen Prepolymer nach Zusatz des die Haftung verbessernden Polymeren in Wasser dispergiert wird und im Falle des Prepolymeren anschließend die weitere Umsetzung zum Polyurethan erfolgt, dadurch gekennzeichnet, daß es sich bei dem die Haftung verbessernden Polymer um ein Reaktionsprodukt einer Verbindung (I), ausgewählt aus aromatischen Verbindungen mit einem aromatischen Ring, zwei kondensierten aromatischen Ringen oder zwei durch eine $C_1$-$C_8$-Alkylengruppe verbundenen aromatischen Ringen, welche an mindestens einem Ring durch mindestens eine Hydroxygruppe und an den aromatischen Ringen gegebenenfalls durch 1 bis 3 $C_1$- bis $C_{12}$-Alkyl- oder -Alkoxygruppen substituiert sind, oder Gemischen dieser Verbindungen mit einer Verbindung (II), ausgewählt aus Verbindungen mit 2 bis 20 Kohlenstoffatomen und mindestens einer Keto- oder Aldehydgruppe, einem $C_4$- bis $C_{16}$-Diolefin, Verbindungen mit 2 bis 10 Kohlenstoffatomen und mindestens einer Dreifachbindung, deren Gemische oder deren Gemische mit Formaldehyd, wobei maximal 70 Mol-% der Verbindung (II) Formaldehyd sind, handelt.

Zur Vermeidung von Lösemittelabfällen und -emissionen finden zunehmend wäßrige Polymerdispersionen, insbesondere auch Polyurethandispersionen, als Klebstoffe Verwendung.

Aus der DE-A-39 03 538 und DE-A-40 24 567 sind Dispersionen, die neben einem Polyurethan weitere Polymere, z.B. ein Phenol-Formaldehydharz, zur Verbesserung der Haftungseigenschaften enthalten, bekannt. Nach dem in der DE-A- 39 03 538 beschriebenen Verfahren wird das Polyurethan in einem niedrigsiedenden, mit Wasser mischbaren Lösungsmittel hergestellt, anschließend das die Haftung verbessernde Polymer zugesetzt und erst danach das erhaltene Gemisch in Wasser dispergiert.

Auf diese Weise werden stabile wässerige Dispersionen erhalten, in denen sich das zugesetzte Polymer mutmaßlich im Innern der Dispersionsteilchen befindet und von einer stabilisierenden Polyurethanschicht umhüllt wird. Diese Dispersionen weisen bei der Verwendung als Kontakt-Klebstoffe nach Wärmeaktivierung eine gute Anfangshaftung auf.

Aus den nicht vorveröffentlichten deutschen Patentanmeldungen

DE-A-41 37 556,
DE-A-41 37 660 und
DE-A-41 37 661

sind entsprechende Polyurethandispersionen bekannt, in welchen das Polyurethan durch einen speziellen Aufbau charakterisiert ist bzw. welche einen Zusatz eines anorganischen Salzes enthalten.

Bei der Verwendung von Klebstoffen ist die sog. "offene Zeit", d.h. die Zeit, die nach dem Trocknen der aufgetragenen Klebstoffschicht bis zur weitgehenden Wasserfreiheit zum Verkleben verbleibt, von besonderer Bedeutung. Bei Überschreiten der offenen Zeit werden keine Verklebungen mit ausreichender Festigkeit mehr erhalten. Insbesondere bei Zusatz eines Vernetzers ist die offene Zeit oft sehr kurz. Von dem Verarbeiter werden besonders lange offene Zeiten gewünscht, um z.B. auch Probleme wie sie sich bei länger andauernden Beschichtungsprozessen ergeben, zu vermeiden.

Klebstoffe können kurz vor dem Verkleben durch Erhitzen zusätzlich aktiviert werden (Wärmeaktivierung). Die nach einer solchen Wärmeaktivierung erreichbaren Sofort-, Endfestigkeiten und Wärmestandfestigkeiten der Verklebungen sind insbesondere bei Vernetzerzusatz im allgemeinen noch nicht ausreichend.

Polyurethandispersionen des Standes der Technik haben eine noch nicht ausreichend lange offene Zeit und die Verklebungen weisen nach Wärmeaktivierung, eine noch zu verbessernde Festigkeit, insbesondere auch bei Zusatz von Vernetzern auf.

Aufgabe der Erfindung war es, diesen Nachteilen abzuhelfen.

Demgemäß wurde die eingangs definierte Polyurethandispersion, ein Verfahren zu ihrer Herstellung sowie ihre Verwendung als Klebstoff gefunden.

Bevorzugte Ausführungsformen der Erfindung sind den Unteransprüchen zu entnehmen.

Die erfindungsgemäßen wäßrigen Dispersionen enthalten ein Polyurethan und 5 bis 60 Gew.-% bevorzugt 10 bis 30 Gew.-%, bezogen auf das Polyurethan, des oben definierten Reaktionsprodukts.

Das Polyurethan ist im wesentlichen, bevorzugt ausschließlich, aufgebaut aus den Komponenten a-d). Bei den gegenüber Isocyanat reaktiven funktionellen Gruppen handelt es sich um Hydroxyl-, primäre oder sekundäre Aminogruppen.

Als Polyisocyanate (a) sind insbesondere aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluylendiisocyanat, Tetramethylxylylendiisocyanat (TMXDI).

Es können auch Gemische der Diisocyanate eingesetzt werden. Insbesondere haben sich Gemische von aliphatischen bzw. cycloaliphatischen Diisocyanaten mit aromatischen Diisocyanaten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Mitverwendet werden können ebenfalls Verbindungen mit mehr als 2 Isocyanatgruppen, wie Biurete oder Isocyanurate, z.B. des Isophorondiisocyanates oder 1,6-Hexamethylendiisocyants.

Geeignete Dihydroxylverbindungen (b) mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Zusätzlich eingesetzt werden können gegebenenfalls auch Verbindungen mit mehr als 2 Hydroxylgruppen, z.B. mit Polypropylenoxid alkoxyliertes Trimethylolpropan oder Glycerin.

Als Komponente (c) geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

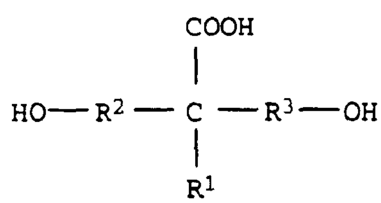

in welcher $R^1$ für ein Wasserstoffatom oder einen Alkylrest mit 1 bis 4 Kohlenstoffatomen und $R^2$ sowie $R^3$ für eine $C_1$-$C_4$-Alkylengruppe stehen. Beispielsweise genannt sei 2,2-Dimethylolpropionsäure.

Erwähnenswert sind weiterhin eine oder zwei Hydroxylgruppen bzw. Aminogruppen enthaltende tertiare Ammoniumsalze sowie Aminocarbonsäuren oder Aminosulfonsauren z.B. Lysin, -Alanin, N-(2-Aminoethyl)-2-aminoethansulfonsäure und die in der DE-A-20 34 479 genannten Addukte von aliphatischen diprimären Diaminen an -olefinische Carbonsauren, z.B. das Addukt von Ethylendiamin an Acrylsäure.

Aufbaukomponente (c) enthält Ionengruppen bzw. in Ionengruppen überführbare Gruppen, um die Dispergierbarkeit des Polyurethans in Wasser zu gewährleisten. Ihr Anteil beträgt üblicherweise 0,03 bis 0,5 Grammäquivalent, vorzugsweise 0,05 - 0,4 Grammäquivalent, bezogen auf 1 Mol Isocyanatgruppen.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid

geeignet. Weitere geeignete Neutralisations- und Quarternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Gegebenenfalls können auch nichtionische Emulgatoren, wie einwertige Polyetheralkohole des Molgewichtsbereiches 500 bis 10 000 g/ mol, vorzugsweise von 1 000 bis 5 000 g/mol mitverwendet werden. Der Einsatz nichtionischer Emulgatoren ist jedoch aufgrund des Gehalts an Verbindungen c) im allgemeinen nicht notwendig.

Aufbaukomponenten d) sind im wesentlichen Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl- 3,5,5-trimethyl-cyclohexan (Isophorondiamin), 4,4'-Diaminodicyclohexylmethan, 2,4-Diaminocyclohexan, 1,2-Diamino-propan, Hydrazin oder Aminoalkohole wie Ethanolamin, Isopropanolamin, Methylethanolamin oder Aminoethoxyethanol.

Gegebenenfalls können ebenfalls Verbindungen mit mindestens 3 mit Isocyanat reaktiven Gruppen in Betracht kommen, z.B. Triole wie Trimethylolpropan oder Glycerin oder auch Ether- oder Estergruppen aufweisende Trihydroxylverbindungen, sowie Pentaerythrit als Tetrahydroxylverbindung, Triaminverbindungen wie Diethylentriamin, 4-Aminomethyloctandiamin, Trisaminoethylamin, Hydroxyl- und Aminogruppen enthaltende Verbindungen wie Diethanolamin.

Die Anteile der Komponenten a) bis d) werden vorzugsweise so gewählt, daß die Funktionalität F, welche definiert ist als:

$$F \frac{\text{Molzahl aller Isocyanatgruppen und mit Isocyanat reaktiver funktioneller Gruppen}}{\text{Molzahl aller Aufbaukomponenten}}$$

im allgemeinen 2,00 bis 2,50, vorzugsweise 2,0 bis 2,20, besonders bevorzugt von 2,00 bis 2,10 beträgt.

Der Nenner der Formel beinhaltet die Summe der Molzahlen der am Aufbau des Polyurethans beteiligten Komponenten, die eine oder mehrere Isocyanatgruppen bzw. mit Isocyanat reaktive funktionelle Gruppen enthalten.

Wenn lediglich difunktionelle Verbindungen eingesetzt werden, ist F = 2.

Insgesamt wird der Anteil der Aufbaukomponenten vorzugsweise so gewählt, daß die Summe der gegenüber Isocyanat reaktiven Hydroxylgruppen und primären oder sekundären Aminogruppen 0,9 bis 1,2, besonders bevorzugt 0,95 bis 1,1 bezogen auf 1 Isocyanatgruppe beträgt.

Zur Herstellung des Polyurethans können die Aufbaukomponenten a) bis d) in einem niedrig siedenden, mit Wasser mischbaren organischen Lösungsmittel oder lösungsmittelfrei in bekannter Weise umgesetzt werden, wie es auch in der DE-A-34 37 918 beschrieben ist.

Als Lösungsmittel können alle gegenüber Isocyanaten unreaktiven Lösungsmittel eingesetzt werden. Besonders bevorzugt sind hierbei solche, die mit Wasser in beliebigen Mengen mischbar sind, wie z.B. Tetrahydrofuran, Methylethylketon, N-Methylpyrrolidon und insbesondere Aceton. Weniger bevorzugt sind hochsiedene mit Wasser mischbare Lösungsmittel, wie z.B. N-Metylpyrrolidon oder Dimethylformamid. In untergeordeneten Mengen können ebenfalls Lösungsmittel nicht mit Wasser mischbare Lösungsmittel enthalten sein, wie z.B. Toluol oder Xylol. Vorzugsweise liegt der Siedepunkt des Lösungsmittels unter 100°C.

Die Reaktionstemperatur liegt vorzugsweise bei 50 bis 120°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan, welches im wesentlichen frei von Isocyanatgruppen ist, wird dann nach Zusatz des oben definierten Reaktionsprodukts in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in einem organischen Lösungsmittel zunächst ein Polyurethanprepolymer hergestellt wird. Nach Zusatz des Reaktionsprodukts wird das erhaltene Polyurethanprepolymer, welches noch Isocyanatgruppen enthält, in Wasser dispergiert. Danach kann die Umsetzung mit den weiteren Aufbaukomponenten erfolgen. Anschließend kann, wie bereits oben beschrieben, das organische Lösungsmittel entfernt werden.

Bei dem Reaktionsprodukt handelt es sich um ein Reaktionsprodukt einer Verbindung (I), ausgewählt aus aromatischen Verbindungen mit einem aromatischen Ring, zwei kondensierten aromatischen Ringen oder zwei durch eine $C_1$-$C_8$-Alkylengruppe verbundenen aromatischen Ringen, welche an mindestens einem Ring durch mindestens eine Hydroxygruppe und an den aromatischen Ringen gegebenenfalls durch 1 bis 3 $C_1$-$C_{12}$-Alkyl- oder -Alkoxygruppen substituiert sind, und den Gemischen diese aromatischen Verbindungen mit einer Verbindung (II) ausgewählt aus Verbindungen mit 2 bis 20 Kohlenstoffatomen und mindestens einer Keto- oder Aldehydgruppe, einem $C_4$-$C_{18}$-Diolefin, Verbindungen mit 2 bis 10 Kohlenstoffatomen und mindestens einer Dreifachbindung, deren Gemische oder Gemische

mit Formaldehyd, wobei maximal 70 Mol-% der Verbindung (II) Formaldehyd sind.

Als Verbindung (I) sind gegebenenfalls durch 1 bis 3 $C_1$-$C_8$-Alkyl- oder Alkoxygruppen substituiertes Phenol, α- oder β-Naphthol oder Bisphenol A bevorzugt. Die Substituenten befinden sich vorzugsweise in meta-Stellung oder p-Stellung zur Hydroxylgruppe an den aromatischen Ringen.

Als Verbindung (I) sind solche Verbindungen bevorzugt, die ein oder zwei, besonders bevorzugt eine Hydroxylgruppe aufweisen.

Bei Verbindung (II) beträgt der Anteil an Formaldehyd, soweit Gemische der genannten Verbindungen mit Formaldehyd eingesetzt werden, maximal 70 Mol-%, vorzugsweise maximal 30 Mol-%, besonders bevorzugt maximal 10 Mol-%, bezogen auf das gesamte als Verbindung (II) eingesetzte Gemisch.

Ganz besonders bevorzugt werden keine Gemische mit Formaldehyd eingesetzt.

Vorzugsweise handelt es sich bei Verbindung (II) um Verbindungen mit 2 bis 14 Kohlenstoffatomen und ein oder zwei, vorzugsweise einer Keto- oder Aldehydgruppe. Diese Verbindungen können aliphatisch oder aromatisch sein oder sowohl aliphatisch als auch aromatische Gruppen enthalten. Vorzugsweise enthalten die Verbindungen neben der Keto- oder Aldehydgruppe keine weiteren funktionellen Gruppen, d.h. keine weiteren Heteroatome neben dem Sauerstoffatom der Aldehyd- oder Ketogruppe.

Als Verbindung (II) seien beispielsweise Acetaldehyd, n-Propionaldehyd, Glykolaldehyd, iso-Propionaldehyd, n-Butyraldehyd, iso-Butyraldehyd, Benzaldehyd, Glykolaldehyd, Glyoxal, Glutardialdehyd, Oxaglutardialdehyd, Aceton, Methylethylketon, Benzophenon, Butadien, Cyclopentadien und Bicyclopentadien, Acetylen, Acrolein, Methylacrolein oder deren Mischungen genannt.

Besonders bevorzugt sind Acetaldehyd, Propionaldehyd, n- und iso-Butyraldehyd und Aceton.

Reaktionsprodukte der Verbindungen (I) und (II) sind allgemein bekannt. Die Reaktion verläuft analog zur Phenyl/Formaldehyd-Kondensation durch Addition der Keto-, Aldehydgruppe bzw., der Doppel- oder der Dreifachbindung vorwiegend in ortho- oder para-Stellung zur Hydroxylgruppe am aromatischen Ring.

Das Molverhältnis der Verbindung (I) zu (II) beträgt bei der Kondensationsreaktion vorzugsweise 1:0,1 bis 1:2, besonders bevorzugt 1:0,7 bis 1:1.

Die Reaktion erfolgt im allgemeinen durch Vorlegen der Verbindung (I) mit einer Säure als Katalysator, z.B. einer Halogenwasserstoffsäure, Bortrifluorid, Schwefelsäure, p-Toluolsulfonsäure, Dodecylbenzolsulfonsäure und anschließendem Zudosieren der Verbindung (II) bei 0 bis 250°C, vorzugsweise 20 bis 230°C.

Nach Ende des Zudosierens kann noch nachkondensiert werden, insbesondere bei Temperaturen von 20 bis 250°C, vorzugsweise von 80 bis 200°C. Während der Reaktion kann, falls gewünscht, Wasser gegeb. unter Verwendung eines Schleppmittels aus dem Reaktionsgemisch entfernt werden.

Der Verlauf der Umsetzung kann durch Messen des Erweichungspunktes des entstandenen Reaktionsprodukts kontrolliert werden.

Die Reaktionsprodukte haben vorzugsweise einen Erweichungspunkt (bestimmt nach DIN 52011) von 50°C bis 200°C, besonders bevorzugt von 80 bis 140 und ganz besonders bevorzugt von 120 bis 140°C.

Das Reaktionsprodukt wird dem Polyurethan bzw. dessen Prepolymer, welche bevorzugt in einem mit Wasser mischbaren Lösungsmittel vorliegen, vor der Dispergierung in Wasser zugesetzt. Prinzipiell kann es zu einem beliebigen Zeitpunkt zu der Reaktionsmischung der Ausgangskomponenten des Polyurethans gegeben werden. Besonders vorteilhaft ist jedoch, es erst dann zuzumischen, wenn der Prepolymeraufbau bereits fortgeschritten ist und der NCO-Gehalt des Prepolymeren einen Wert von weniger als 5 Gew.-% erreicht hat. Das Reaktionsprodukt kann als solches oder auch als Lösung zugesetzt werden. Als Lösungsmittel sind neben Wasser insbesondere ebenfalls niedrig siedende, mit Wasser mischbare organische Lösungsmittel geeignet.

Die schließlich nach der Dispergierung des Gemisches in Wasser, gegebenenfalls Umsetzung des Polyurethanprepolymeren zum Polyurethan und gegebenenfalls Abdestillation des organischen Lösungsmittels erhaltene, erfindungsgemäße Dispersion, weist bevorzugt einen Feststoffgehalt von 10 bis 70 Gew.-%, insbesondere 20 bis 50 Gew.-% auf.

Die erfindungsgemäßen Dispersionen eignen sich zur Verwendung als Klebstoff. Sie können z.B. unmittelbar als Kontaktkleber zum Verkleben verschiedenster Substrate, z.B. von Holz, Kunststoff, Glas und Metall verwendet werden. Zur Erzielung spezieller Eigenschaften können den Dispersionen weitere Zusatzstoffe wie Weichmacher, Filmbildehilfsmittel, Füllstoffe etc. zugesetzt werden. Vorteilhafterweise werden Klebstoffbeschichtungen auf die Oberflächen beider zu verklebenden Substrate aufgetragen.

Den Dispersionen kann zusätzlich zur Vernetzung ein Isocyanat-Härter zugesetzt werden. Die Isocyanatgruppen des Härters können z.B. mit den Urethangruppen vernetzen. Die Menge des Härters kann z.B. 0,1 bis 20 Gew.-%, vorzugsweise 0,5 bis 10 Gew.-%, bezogen auf das Polyurethan betragen.

Geeignete Härter sind Polyisocyanate mit einer mittleren Isocyanat-Funktionalität von mindestens 2,0, bevorzugt von 2,2 bis 5,0 und einem Isocyanat-Gehalt von 5-30 Gew.-%, bevorzugt von 10 bis 25 Gew.-%, die vorzugsweise eine maximale Viskosität von 10000 mPas bei 25°C aufweisen. Prinzipiell geeignet sind alle unter a) bereits genannten Polyisocyanate. Bevorzugt werden jedoch s.g. "Lackpolyisocyanate" eingesetzt, wie sie beispielsweise in der EP-PS

0 358 979 beschrieben sind. Bei diesen Verbindungen handelt es sich z.B. um die Uretdion-, Biuret- und Isocyanurat-Gruppen aufweisenden Additionsprodukte von Diisocyanaten wie z.B. 1,6-Diisocyanatohexan oder Isophorondiisocyanat, die eine geringere Viskosität von beispielsweise 50 bis 500 oder 50 bis 3000 mPas bei 25°C aufweisen können. Besonders bevorzugt sind Isocyanat-Härter, die zusätzlich noch eine die Dispergierbarkeit in Wasser gewährleistende Menge eines Emulgators enthalten, wobei der Emulgator ein Umsetzungsprodukt eines Polyisocyanats mit einem ein- oder mehrwertigen, nicht-ionischen Polyether-Alkohol mit mindestens einer, mindestens 10 Ethylenoxideinheiten aufweisenden Polyetherkette sein kann.

Derartige wasseremulgierbare Polyisocyanate sind beispielsweise in der EP-A-0 206 059 oder der DE-OS 4 036 927 beschrieben.

Diese Isocyanat-Härter werden vorzugsweise unmittelbar vor der Verarbeitung mit der erfindungsgemäßen Dispersion vermischt.

Die erfindungsgemäßen Dispersionen haben bei der Verwendung als Klebstoffe eine lange offene Zeit und ergeben Verklebungen mit hohen Festigkeiten und Wärmestandfestigkeiten.

## Beispiele

Die in den nachfolgenden Beispielen verwendeten Abkürzungen haben die nachstehend wiedergegebenen Bedeutungen:

ADS = Adipinsäure
B14 = 1,4-Butandiol
TDI = Toluylendiisocyanat
HDI = Hexamethylendiisocyanat
IPDI = Isophorondiisocyanat
PUD = Na-Salz des Michael-Addukts aus Acrylsäure und Ethylendiamin
DBTL = Dibutylzinndilaurat
DMPA = Dimethylolpropionsäure
TMP = Trimethylolpropan

### Vergleichsbeispiel 1

| | Molmenge [mmol] | Gewichtsteile [g] |
|---|---|---|
| Polyesterdiol (OH-Zahl: 45,0) | 198 | 492 |
| TDI | 147 | 25,6 |
| HDI | 178 | 24,7 |
| DBTL | | 0,1 |
| Aceton I | | 133 |
| Aceton II | | 532 |
| PUD (40 Gew.%ig) | 94 | 42,0 |
| Phenol-Formaldehyd-Kondensationsharz, Erweichungstemperatur (DIN 52011) 128°C) | | 240 |
| Aceton III | | 240 |
| entiontes Wasser | | 1200 |

Der Mischung aus entwässertem Polyesterdiol (aus Adipinsäure und 1,4-Butandiol), Aceton I und DBTL wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,75 %.

Bei 50°C wurde mit PUD, das als 40 %ige Lösung in Wasser vorlag, kettenverlängert. Nach 5 Minuten wurde die Harzlösung, hergestellt aus Aceton III und einem Kondensat aus Phenol und Formaldehyd zugesetzt und 5 Minuten bei 50°C gerührt. Anschließend wurde mit Wasser dispergiert und das Aceton abdestilliert. Die Dispersion wurde danach mit entiontem Wasser auf einen Feststoffgehalt von 40 Gew.-% eingestellt.

Beispiel 1

Die Herstellung der Dispersion erfolgte analog zu Vergleichsbeispiel 1. Statt des Phenol-Formaldehyd-Harzes wurde jedoch ein Harz auf Basis Phenol und einem Gemisch aus n- und iso-Butyraldehyd eingesetzt (Molverhältnis n- zu iso-Butyraldehyd = 1:1). Erweichungspunkt (DIN 52011): 153°C)).

Beispiel 2

Die Herstellung der Dispersion erfolgte analog zu Vergleichsbeispiel 1. Statt des Phenol-Formaldehyd-Harzes wurde jedoch ein Harz auf Basis Phenol und einem Gemisch aus n- und iso-Butyraldehyd eingesetzt (Molverhältnis n- zu iso-Butyraldehyd = 1:1). Erweichungspunkt (DIN 52011): 128°C.

Beispiel 3

Die Herstellung der Dispersion erfolgte analog zu Vergleichsbeispiel 1. Statt des Phenol-Formaldehyd-Harzes wurde jedoch ein Harz auf Basis Phenol und Dicyclopentadien eingesetzt. Erweichungspunkt (DIN 52011): 108°C.

Beispiel 4

Die Herstellung der Dispersion erfolgte analog zu Vergleichsbeispiel 1. Statt des Phenol-Formaldehyd-Harzes wurde jedoch ein Harz auf Basis Phenol, Aceton und Formaldehyd (Molverhältnis 1:1) eingesetzt. Erweichungspunkt (DIN 52011): 113°C.

Beispiel 5

Die Herstellung der Dispersion erfolgte analog zu Vergleichsbeispiel 1. Statt des Phenol-Formaldehyd-Harzes wurde jedoch ein Harz auf Basis Phenol, und einem Gemisch aus n- und iso-Butyraldehyd eingesetzt (Molverhältnis n- zu iso-Butyraldehyd = 1:1). Erweichungspunkt (DIN 52011): 128°C.

Beispiel 6

| | Molmenge [mmol] | Gewichtsteile [g] |
|---|---|---|
| Polyesterdiol (OH-Zahl: 45,0) | 196 | 489 |
| TDI | 159 | 27,8 |
| HDI | 159 | 26,8 |
| DBTL | | 0,1 |
| Aceton I | | 133 |
| | | |
| Aceton II | | 532 |
| PUD (40 Gew.%ig) | 94 | 42,0 |
| Phenol-iso-Butyraldehyd-Kondensationsharz, Erweichungstemperatur (DIN 52011): 132°C | | 240 |
| Aceton III | | 240 |
| entiontes Wasser | | 1200 |

Die Herstellung erfolgte analog zu Beispiel 1, mit der Ausnahme, daß die Reaktionszeit mit HDI auf 80 Minuten verlängert wurde.

Beispiel 7

| | Molmenge [mmol] | Gewichtsteile [g] |
|---|---|---|
| Polyesterdiol (OH-Zahl: 45,0) | 184 | 458 |
| Dimethylolpropionsäure | 160 | 21,4 |
| TDI | 235 | 41,0 |
| HDI | 235,6 | 39,5 |
| DBTL | | 0,1 |
| Aceton I | | 137 |
| | | |
| Aceton II | | 548 |
| Phenol-n-, iso-Butyraldehyd-Kondensationsharz, Erweichungstemperatur (DIN 52011) 128°C | | 240 |
| Aceton III | | 240 |
| entiontes Wasser | | 1200 |
| Isophorondiamin | 96 | 16,3 |

Der Mischung aus entwässertem Polyesterol (hergestellt aus Adipinsäure und 1,4-Butandiol) Dimethylolpropionsäure, Aceton I und Katalysator wurde das TDI zugegeben. Nach einer Stunde Reaktionszeit bei 65°C wurde das HDI zugesetzt und weitere 110 Minuten umgesetzt. Nach Zulauf von Aceton II hatte die Reaktionsmischung einen NCO-Gehalt von 0,65%. Anschließend wurde die Harzlösung, hergestellt aus Aceton III und einem Kondensat aus Phenol und einem Gemisch aus n-Butyraldehyd und iso-Butyraldehyd (Molverhältnis 1:1) zugesetzt. Nach dem Abkühlen der Lösung auf 30°C wurde innerhalb von 20 Minuten mit Wasser dispergiert, durch Zugabe von Isophorondiamin kettenverlängert und das Aceton abdestilliert. Die Dispersion wurde danach mit entiontem Wasser auf einen Feststoffgehalt von 40 Gew.-% eingestellt.

Beispiel 8

| | Molmenge [mmol] | Gewichtsteile [g] |
|---|---|---|
| Polyetherol (OH-Zahl: 56) | 200 | 401 |
| Dimethylolpropionsäure | 161 | 21,6 |
| TDI | 670 | 117 |
| DBTL | | 0,1 |
| | | |
| Aceton I | | 684 |
| Phenol-n-, iso-Butyraldehyd-Kondensationsharz, Erweichungstemperatur (DIN 52011) 128°C | | 240 |
| | | |
| Aceton II | | 240 |
| entiontes Wasser | | 1200 |

Der Mischung aus Polyetherol (entwässertes Polypropylenoxid), Dimethylolpropionsäure und Katalysator wurde das TDI zugegeben und bei einer Reaktionstemperatur von 105°C 3 Stunden umgesetzt. Nach Zulauf von Aceton I hatte die Reaktionsmischung einen NCO-Gehalt von 0,56 %.

Anschließend wurde die Harzlösung, hergestellt aus Aceton II und einem Kondensat aus Phenol und einem Gemisch aus n-Butyraldehyd und iso-Butyraldehyd (Molverhältnis 1:1) zugesetzt. Nach dem Abkühlen der Lösung auf 30°C wurde innerhalb von 20 Minuten mit Wasser dispergiert, und das Aceton abdestilliert. Die Dispersion wird danach mit entiontem Wasser auf einen Feststoffgehalt von 40 Gew.% eingestellt.

Beispiel 9

| | Molmenge [mmol] | Gewichtsteile [g] |
|---|---|---|
| Polyetherol (OH-Zahl: 56) | 177 | 354 |
| Dimethylolpropionsäure | 31 | 4,2 |
| 1,4-Butandiol | 513 | 46,2 |
| Trimethylolpropan | 18 | 2,4 |
| TDI | 410 | 71,4 |
| HDI | 410 | 69,0 |
| DBTL | | 0,1 |
| Aceton I | | 133 |
| Aceton II | | 532 |
| PUD-Salz (40%ig) | 73 | 31,9 |
| Phenol-iso-Butyraldehyd-Kondensationsharz, Erweichungstemperatur (DIN 52011): 132°C | | 240 |
| Aceton III | | 240 |
| entiontes Wasser | | 1200 |

Der Mischung aus entwässertem Poly THF 2000 (ein Polytetramethylenoxid), 1,4-Butandiol, Trimethylolpropan und Dimethylolpropionsäure, Aceton I und Katalysator wurde das TDI zugegeben. Nach einer Stunde Reaktionszeit bei 60°C wurde das HDI zugesetzt und weitere 90 Minuten umgesetzt. Nach Zulauf von Aceton II hatte die Reaktionsmischung einen NCO-Gehalt von 0,64 %.

Bei 50°C wurde mit PUD, das als 40%ige Lösung in Wasser vorlag, kettenverlängert. Nach 5 Minuten wurde die Harzlösung, hergestellt aus Aceton III und einem Kondensat aus Phenol und einem Gemisch aus n-Butyraldehyd und iso-Butyraldehyd (Molverhältnis 1:1) zugesetzt und 5 Minuten bei 50°C gerührt. Anschließend wurde mit Wasser dispergiert und das Aceton abdestilliert. Die Dispersion wird danach mit entiontem Wasser auf einen Feststoffgehalt von 40 Gew.% eingestellt.

Prüfung der Kontaktverklebung bei Raumtemperatur

Probenvorbereitung:

Die Dispersionen wurden mit 5 Gew.-%, bezogen auf Ihren Feststoff, pyrogener Kieselsäure angedickt. Diese Zubereitung wurde in 2 Portionen geteilt, wobei eine Hälfte mit 7,5 Gew.-%, bezogen auf den Feststoff, mit einem wasseremulgierbar modifiziertem trimerisiertem Hexamethylendiisocyanat, versetzt wird und die andere Hälfte unverändert bleibt.

Scherfestigkeit:

Mit einem Rakel mit 1 mm-Zahnung wurden die jeweiligen Dispersionen oder Mischungen auf Buchenholzscheiben auf einer Fläche von 150 x 50 mm2 aufgetragen und 60 Minuten bei Raumtemperatur getrocknet. Diese Prüfkörper wurden sofort danach (A, C in Tab 1) oder 2 Std. später B,D in Tab 1) verklebt, indem sie 30 Sekunden bei Raumtemperatur mit einem Druck von 0,5 N/mm2 verpreßt werden. Die Scherfestigkeit wurde sofort (Sofortfestigkeit) und nach 7 Tagen Lagerung bei Raumtemperatur (Endfestigkeit) in N/mm2 gemessen.

Wärmestandfestigkeit:

Eine Hartfaserplatte wurde auf einer Fläche von 200 x 200 mm2 mit einer PVC-Folie verklebt (Kontaktverklebung bei Raumtemperatur). In einem Abschälwinkel von 180° wurde die PVC-Folie mit 300g belastet. Die Temperatur wurde

alle 30 Minuten um 10°C erhöht. Angegeben ist die maximale Temperatur, bei der die PVC-Folie sich noch nicht vollständig von der Hartfaserplatte löst.

Tabelle 1 Klebetechnische Werte

| | Sofortfestigkeit [N/mm²] | | | | Endfestigkeit [N/mm²] | | | | Wärmestandfestigkeit [°C] | | | |
|---|---|---|---|---|---|---|---|---|---|---|---|---|
| | A | B | C | D | A | B | C | D | A | B | C | D |
| Vergl.-Bsp. 1 | 1,2 | 1,0 | 0,7 | 0,0 | 3,0 | 2,8 | 1,0 | 0,1 | 60 | 60 | 80 | -* |
| Bsp. 1 | 1,4 | 1,1 | 1,4 | 1,2 | 4,2 | 4,0 | 4,1 | 3,8 | 60 | 60 | 80 | 80 |
| Bsp. 2 | 2,2 | 1,6 | 2,2 | 1,7 | 4,6 | 3,7 | 4,5 | 3,9 | 40 | 70 | 70 | 70 |
| Bsp. 3 | 1,1 | 1,0 | 1,2 | 1,1 | 3,7 | 3,4 | 3,6 | 3,6 | 60 | 60 | 80 | 80 |
| Bsp. 4 | 1,0 | 1,0 | 0,9 | 0,9 | 3,1 | 3,0 | 3,2 | 3,0 | 50 | 50 | 60 | 60 |
| Bsp. 5 | 1,0 | 0,8 | 1,0 | 0,8 | 3,4 | 2,8 | 3,3 | 2,7 | 70 | 70 | 90 | 90 |
| Bsp. 6 | 1,5 | 1,3 | 1,5 | 1,3 | 5,0 | 4,8 | 4,9 | 4,7 | 60 | 60 | 80 | 80 |
| Bsp. 7 | 1,4 | 1,2 | 1,3 | 1,2 | 4,5 | 4,7 | 4,7 | 4,6 | 70 | 70 | 90 | 90 |
| Bsp. 8 | 1,0 | 0,9 | 1,1 | 1,0 | 4,3 | 4,1 | 4,2 | 4,1 | 70 | 70 | 90 | 90 |
| Bsp. 9 | 1,0 | 0,8 | 1,1 | 1,0 | 3,5 | 3,4 | 3,7 | 3,3 | 60 | 60 | 80 | 80 |

A: Dispersion ohne Vernetzer, Verpressen unmittelbar nach der Trocknung

B: Dispersion ohne Vernetzer, Verpressen 2 Stunden nach der Trocknung

C: Dispersion mit Vernetzer, Verpressen unmittelbar nach der Trocknung

D: Dispersion mit Vernetzer, Verpressen 2 Stunden nach der Trocknung

* Die Wärmestandfestigkeit war so gering, daß keine Werte bestimmt werden konnten

Die Versuchsergebnisse zeigen, daß mit den erfindungsgemäßen Dispersionen auch noch bei Verklebung 2 Stunden nach Trocknung (lange offene Zeit) hohe Sofortfestigkeiten, Endfestigkeiten und Wärmestandfestigkeiten erreicht werden. Insbesondere ist dies auch bei Zusatz eines Vernetzers der Fall, wodurch im allgemeinen die offene Zeit verkürzt wird.

Prüfung der Kontaktverklebung nach (Wärmeaktivierung) Blitzaktivierung

Probenvorbereitung:

Die Dispersionen wurden mit 7,5% Gew.-%, bezogen auf Ihren Feststoff, pyrogener Kieselsäure angedickt. Diese Zubereitung wurde in 2 Portionen geteilt, wobei eine Hälfte mit 7,5 Gew.-%, bezogen auf den Feststoff, mit einem wasseremulgierbar modifizierten trimerisierten Hexamethylendiisocyanat, versetzt wurde und die andere Hälfte unverändert blieb.

Schälfestigkeit:

Die Dispersionen werden mit einem Pinsel (2,54 cm (1 Zoll), feine Borsten) gleichmäßig auf Styrol-Butadiengummi (SBR1-Gummi mit einer shore-A-Härte von 90 (s. DIN 16 909)) auf einer Fläche von 30 x 130 $mm^2$ aufgestrichen und 45 Minuten bei Raumtemperatur getrocknet. Nach einmaliger Aufheizung der Klebstoffilme durch IR-Strahlung auf 80°C im Verlauf von ca. 5 Sekunden (Blitzaktivierung) wurden die Proben 10 Sekunden mit 0,5 $N/mm^2$ verpreßt. Die Schälfestigkeit wurde sofort und nach 5 Tagen Lagerung im Klimaraum (23°C/50% rel.) nach DIN 52273 gemessen.

Wärmestandfestigkeit:

Die Prüfkörper wurden wie zur Schälfestigkeitsprüfung hergestellt. Nach Temperung von 1 Stunde bei 50°C wurden sie bei 50°C jeweils 10 Minuten mit 5, 10, 15, 20, 25 und 30 N in aufsteigender Reihenfolge belastet. Hielt die Verklebung, so wurde die Probe entlastet, 30 Minuten auf 60°C aufgeheizt und wieder bis max. 30 N in 10 Minutenschritten geprüft. In gleicher Weise wurde die Prüfung nach jedem Durchlauf um 10°C erhöht. Angegeben sind jeweils die Temperatur (°C) und die Belastung (N) bei der eine Öffnung der Verklebung von mehr als 50 mm erkennbar war.

Tabelle 2

| Klebetechnische Werte | | | | | | |
|---|---|---|---|---|---|---|
| | Sofortfestigkeit [$N/mm^2$] | | Endfestigkeit [$N/mm^2$] | | Wärmestandfestigkeit [N/mm] | |
| | A | B | A | B | A | B |
| Vergl.-Bsp. 1 | 1,5 | 0,3 | 2,4 | 0,5 | 50/15 | 50/30 |
| Bsp. 1 | 2,5 | 2,3 | 4,5 | 4,4 | 50/30 | 70/10 |
| Bsp. 2 | 1,8 | 1,9 | 4,7 | 4,7 | 50/15 | 60/25 |
| Bsp. 3 | 1,9 | 2,0 | 3,9 | 4,1 | 60/10 | 70/30 |
| Bsp. 4 | 1,3 | 1,0 | 2,2 | 1,8 | 50/10 | 60/5 |
| Bsp. 5 | 3,8 | 3,7 | 6,1 | 5,0 | 70/30 | 80/20 |
| Bsp. 6 | 2,6 | 2,5 | 3,7 | 4,0 | 50/5 | 60/20 |
| Bsp. 7 | 3,0 | 2,8 | 2,7 | 2,8 | 50/10 | 70/15 |
| Bsp. 8 | 2,3 | 2,4 | 3,5 | 3,9 | 60/20 | 70/20 |
| Bsp. 9 | 1,4 | 1,5 | 4,4 | 4,1 | 50/30 | 70/25 |

A: Dispersion ohne Zusatz des Vernetzers

B: Dispersion mit Zusatz des Vernetzers

**Patentansprüche**

1. Wäßrige Dispersionen, enthaltend ein Polyurethan und 5 bis 60 Gew.-%, bezogen auf das Polyurethan, eines die Haftung verbessernden Polymeren, wobei das Polyurethan im wesentlichen aufgebaut ist aus

(a) organischen Polyisocyanaten

(b) Dihydroxylverbindungen mit einem Molekulargewicht über 500 bis 5000 g/mol, welche keine Ionengruppen oder in ionische Gruppen überführbaren Gruppen enthalten

(c) Verbindungen mit mindestens einer gegenüber Isocyanat reaktiven funktionellen Gruppe und mindestens einer ionischen oder in eine ionische Gruppe überführbaren Gruppe,

(d) gegebenenfalls von (c) verschiedenen Verbindungen mit mindestens zwei gegenüber Isocyanat reaktiven funktionellen Gruppen und einem Molgewicht von 60 bis 500 g/mol

und das Polyurethan oder dessen Prepolymer nach Zusatz des die Haftung verbessernden Polymeren in Wasser dispergiert wird und im Falle des Prepolymeren anschließend die weitere Umsetzung zum Polyurethan erfolgt, dadurch gekennzeichnet, daß es sich bei dem die Haftung verbessernden Polymer um ein Reaktionsprodukt einer Verbindung (I), ausgewählt aus aromatischen Verbindungen mit einem aromatischen Ring, zwei kondensierten aromatischen Ringen oder zwei durch eine $C_1$-$C_8$-Alkylengruppe verbundenen aromatischen Ringen, welche an mindestens einen Ring durch mindestens eine Hydroxygruppe und an den aromatischen Ringen gegebenenfalls durch 1 bis 3 $C_1$- bis $C_{12}$-Alkyl- oder -Alkoxygruppen substituiert sind, oder Gemischen dieser Verbindungen mit einer Verbindung (II), ausgewählt aus Verbindungen mit 2 bis 20 Kohlenstoffatomen und mindestens einer Keto- oder Aldehydgruppe, einem $C_4$- bis $C_{16}$-Diolefin, Verbindungen mit 2 bis 10 Kohlenstoffatomen und mindestens einer Dreifachbindung, deren Gemische oder deren Gemische mit Formaldehyd, wobei maximal 70 Mol-% der Verbindung (II) Formaldehyd sind, handelt.

2. Wäßrige Dispersionen gemäß Anspruch 1, wobei es sich bei Verbindung I um gegebenenfalls durch 1 bis 3 $C_1$- bis $C_{12}$-Alkyl- oder Alkoxygruppen substituiertes Phenol, α- oder β-Naphthol oder Bisphenol A handelt.

3. Wäßrige Dispersionen gemäß Anspruch 1, wobei es sich bei Verbindung II um Verbindungen mit 2 bis 14 Kohlenstoffatomen und einer Aldehyd- bzw. Ketogruppe, um $C_4$- bis $C_8$-Diolefine, Acetylen, deren Gemische oder deren Gemische mit Formaldehyd, wobei maximal 70 Mol-% der Verbindung (II) Formaldehyd sind, handelt.

4. Wäßrige Dispersionen gemäß einem der Ansprüche 1 bis 3, enthaltend zusätzlich 0,1 bis 20 Gew.-%, bezogen auf das Polyurethan, eines wasseremulgierbaren Isocyanat-Härters, wobei der Härter eine Isocyanat-Funktionalität von mindestens 2,0 und einen Isocyanatgehalt von mindestens 10 Gew.-% aufweist.

5. Verfahren zur Herstellung einer wäßrigen Dispersion gemäß Anspruch 1, dadurch gekennzeichnet, daß das Polyurethan oder dessen Prepolymer in einem unter 100°C siedenden, mit Wasser mischbaren Lösungsmittel hergestellt und nach Zusatz des die Haftung verbessernden Polymeren in Wasser dispergiert wird und im Falle des Prepolymeren anschließend die weitere Umsetzung zum Polyurethan erfolgt.

6. Verwendung der Dispersionen nach einem der Ansprüche 1 bis 4 als Klebstoffe.

7. Klebstoffbeschichtungen, erhältlich unter Verwendung einer Dispersion nach einem der Ansprüche 1 bis 4.

## Claims

1. An aqueous dispersion containing a polyurethane and from 5 to 60% by weight, based on the polyurethane, of an adhesion-improving polymer, the polyurethane essentially comprising

(a) organic polyisocyanates,
(b) dihydroxy compounds which have a molecular weight of from more than 500 to 5,000 g/mol and contain no ionic groups or groups convertible into ionic groups,
(c) compounds having at least one functional group reactive toward isocyanate and at least one ionic group or group convertible into an ionic group and
(d) if required, compounds which differ from (c) and have at least two functional groups reactive toward ioscyanate and a molecular weight of from 60 to 500 g/mol,

and the polyurethane or the prepolymer thereof being dispersed in water after the addition of the adhesion-improving polymer and, in the case of the prepolymer, the further conversion to the polyurethane then being effected, wherein the adhesion-improving polymer is a reaction product of a compound (I), selected from aromatic compounds having one aromatic ring, two fused aromatic rings or two aromatic rings bonded by a $C_1$-$C_8$-alkylene group, which are substituted in at least one ring by at least one hydroxyl group and may be substituted in the aromatic rings by from 1 to 3 $C_1$-$C_{12}$-alkyl or $C_1$-$C_{12}$-alkoxy groups, or mixtures of these compounds with a compound (II) selected from compounds having 2 to 20 carbon atoms and at least one keto or aldehyde group, a $C_4$-$C_{16}$-diolefin, compounds having 2 to 10 carbon atoms and at least one triple bond, mixtures thereof or mixtures thereof with formaldehyde, not more than 70 mol % of the compound (II) being formaldehyde.

**2.** An aqueous dispersion as claimed in claim 1, wherein compound I is $\alpha$- or $\beta$-naphthol, bisphenol A or phenol which is unsubstituted or substituted by from 1 to 3 $C_1$-$C_{12}$-alkyl or alkoxy groups.

**3.** An aqueous dispersion as claimed in claim 1, wherein compound II is a compound having 2 to 14 carbon atoms and an aldehyde or keto group, a $C_4$-$C_8$-diolefin, acetylene, a mixture thereof or a mixture thereof with formaldehyde, not more than 70 mol % of the compound (II) being formaldehyde.

**4.** An aqueous dispersion as claimed in any of claims 1 to 3, additionally containing from 0.1 to 20% by weight, based on the polyurethane, of a water-emulsifiable isocyanate curing agent, wherein the curing agent has an isocyanate functionality of at least 2.0 and an isocyanate content of at least 10% by weight.

**5.** A process for the preparation of an aqueous dispersion as claimed in claim 1, wherein the polyurethane or the prepolymer thereof is prepared in a water-miscible solvent boiling below 100°C and, after the addition of the adhesion-improving polymer, is dispersed in water, and, in the case of the prepolymer, the further conversion to the polyurethane is then carried out.

**6.** Use of a dispersion as claimed in any of claims 1 to 4 as an adhesive.

**7.** An adhesive coating obtainable by using a dispersion as claimed in any of claims 1 to 4.

**Revendications**

**1.** Dispersions aqueuses, qui contiennent un polyuréthanne et de 5 à 60% en poids, par rapport au polyuréthanne, d'un polymère améliorant l'adhérence, où le polyuréthanne est essentiellement constitué

(a) de polyisocyanates organiques,
(b) de composés dihydroxylés possédant un poids moléculaire supérieur à 500 à 5000 g/mole, qui ne contiennent ni radicaux ioniques, ni radicaux convertibles en radicaux ioniques,
(c) de composés avec au moins un radical fonctionnel réagissant avec l'isocyanate et au moins un radical ionique ou un radical convertible en radical ionique,
(d) éventuellement des composés qui diffèrent de (c) avec au moins deux groupes fonctionnels réagissant sur l'isocyanate et d'un poids moléculaire de 60 à 500 g/mole

et on disperse dans de l'eau le polyuréthanne ou son prépolymère après l'addition du polymère améliorant l'adhérence et, dans le cas du prépolymère, on effectue ensuite la conversion complémentaire en polyuréthanne, caractérisé en ce que, dans le cas du polymère améliorant l'adhérence, il s'agit d'un produit de réaction d'un composé (I), choisi parmi des composés aromatiques comportant un noyau aromatique, deux noyaux aromatiques condensés ou deux noyaux aromatiques liés par un groupe alkylène en $C_1$ à $C_8$, qui sont substitués sur au moins un noyau par au moins un radical hydroxyle et sur les noyaux aromatiques éventuellement par 1 à 3 groupes alcoxy ou alkyle en $C_1$ à $C_{12}$, ou des mélanges de ces composés avec un composé (II), choisi parmi des composés possédant de 2 à 20 atomes de carbone et au moins un radical céto ou aldéhyde, une dioléfine en $C_4$ à $C_{16}$, des composés comportant 2 à 10 atomes de carbone et au moins une triple liaison, leurs mélanges ou leurs mélanges avec le formaldéhyde, où au maximum 70% molaires du composé (II) sont constitués de formaldéhyde.

**2.** Dispersions aqueuses suivant la revendication 1, caractérisées en ce que, dans le cas du composé I, il s'agit du bisphénol A, de l'$\alpha$- ou du $\beta$-naphtol, ou du phénol éventuellement substitué par de 1 à 3 radicaux alcoxy ou alkyle en $C_1$ à $C_{12}$.

**3.** Dispersions aqueuses suivant la revendication 1, caractérisées en ce que, dans le cas du composé II, il s'agit de composés comportant 2 à 14 atomes de carbone et un groupe aldéhyde ou céto, de dioléfines en $C_4$ à $C_8$, d'acétylène, de leurs mélanges ou de leurs mélanges avec le formaldéhyde, où au maximum 70% molaires du composé (II) sont constitués de formaldéhyde.

**4.** Dispersions aqueuses suivant l'une quelconque des revendications 1 à 3, caractérisées en ce qu'elles contiennent complémentairement 0,1 à 20% en poids, par rapport au polyuréthanne, d'un durcisseur du type isocyanate émulsionnable dans l'eau, où le durcisseur présente une fonctionnalité isocyanate d'au moins 2,0 et une teneur en isocyanate d'au moins 10% en poids.

**5.** Procédé de préparation d'une dispersion aqueuse suivant la revendication 1, caractérisé en ce que l'on prépare le polyuréthanne ou son prépolymère dans un solvant miscible à l'eau, bouillant en dessous de 100°C et, après l'addition du polymère améliorant l'adhérence, on le disperse dans de l'eau et, dans le cas du prépolymère, on procède ensuite à la conversion complémentaire en polyuréthanne.

**6.** Utilisation des dispersions suivant l'une quelconque des revendications 1 à 4, à titre de colles.

**7.** Revêtements collants que l'on peut obtenir par l'utilisation d'une dispersion suivant l'une quelconque des revendications 1 à 4.